# EUROPÄISCHE PATENTSCHRIFT

(11) **EP 2 822 057 B1**
(45) Veröffentlichungstag und Bekanntmachung des Hinweises auf die Patenterteilung: **10.05.2017**
(21) Anmeldenummer: 13405080.6
(22) Anmeldetag: 04.07.2013
(51) Int. Cl.: H01M 2/02, H01M 4/02, H01M 10/04, H01M 10/0525, H01M 10/0587, H01M 2/18, H01M 4/78

(54) **Batterie im Wickelaufbau**
Battery with a wound construction
Batterie à structure enroulée

(43) Veröffentlichungstag der Anmeldung: 07.01.2015
(73) Patentinhaber: Wyon AG, 9050 Appenzell Steinegg (CH)
(72) Erfinder: Bernholz, Uwe, 9050 Appenzell Eggerstanden (CH)
(74) Vertreter: Rüfenacht, Philipp Michael

(56) Entgegenhaltungen:
- EP-A1- 1 100 139
- JP-A- H06 260 172
- JP-A- 2001 057 243
- JP-A- 2013 073 757
- JP-A- 2013 097 980
- JP-A- 2013 101 829
- US-A1- 2003 180 605
- US-B1- 7 273 674

## Beschreibung

### Technisches Gebiet

Die Erfindung betrifft Batterien im Wickelaufbau, sowie Verfahren zu deren Herstellung. Insbesondere betrifft die vorliegende Erfindung Batterien mit einem Gehäuse, das durch mindestens eine Einbuchtung, Ausbuchtung oder Ausnehmung von einer im Querschnitt rechteckigen Grundform abweicht, und welche ein aufgewickeltes aktives Band aufweisen. Insbesondere betrifft die Erfindung Batterien und Verfahren zu ihrer Herstellung gemäss den Oberbegriffen der unabhängigen Ansprüche.

### Stand der Technik

Die Verbreitung von aufladbaren elektrischen Systemen wie zum Beispiel Lithium-Ionen Batterien nimmt ständig zu. Miniaturisierung und immer kompaktere Bauweisen ermöglichen es, die Batterien in einem weiten Spektrum an elektronischen Geräten einzusetzen. Als besonders energieeffizient und kostengünstig in der Herstellung haben sich Batterien im sogenannten Wickelaufbau erwiesen.

Der Wickelaufbau (Jelly oder Swiss roll) wird für alle Arten von wiederaufladbaren Batterien verwendet. Bekannt sind vor allem zylindrische Batterien oder Zellen im AA, AAA oder D Typ mit Wickelaufbau. Grundsätzlich wird dabei Anodenmaterial und Kathodenmaterial, durch einen Separator getrennt, bandweise aufgewickelt und in einem hohlen Zylinder verstaut. In seiner einfachsten Variante hat das aufgewickelte aktive Band eine im Wesentlichen zylindrische, walzenförmige Form und füllt ein ebenso geformtes Gehäuse optimal aus.

Eine Batterie mit elektrochemischen Zellen im Wickelaufbau wird in EP 0 144 757 B1 (GTE Government Systems) gezeigt. Die Batterie umfasst ein im Wesentlichen zylindrisches Gehäuse, worin ein um eine zentrale Spule gewickeltes aktives Band aus Kathode, Anode und Separator enthalten ist.

Besonders für miniaturisierte Batterien oder Batterien für kleine bis mittlere Geräte ist es aber wichtig, dass die Form der Batterie den gestalterischen Erfordernissen des Geräts angepasst ist. Dadurch weicht die Form der Batterie häufig von der für die Wickelform idealen zylindrischen Form ab. Dadurch entstehen im Gehäuse der fertigen Batterie oder im Gerätegehäuse, wenn die Batterie direkt im Gerät untergebracht ist, Hohlräume oder inaktive Zonen. Die Energiedichte pro Volumen der Batterie nimmt insgesamt ab. In miniaturisierten Batterien ist dadurch der relative Effizienzverlust besonders hoch.

Es besteht somit ein Bedürfnis, eine Batterie mit beliebiger Gehäuseform bereitzustellen, welche das zur Verfügung stehende Volumen optimal mit Aktivmaterial ausnutzt und dabei gleichzeitig kostengünstig und effizient herstellbar ist.

Ein Beispiel, wie die durch den Wickelaufbau entstehenden Leerräume in nicht zylindrischen Batterien genutzt werden können, ist in der US 5,556,722 (Sanyo Electric Co.) gezeigt. Das aktive Band ist spiralförmig aufgewickelt und besetzt in aufgewickelte Form einen im Wesentlichen zylinderischen Raum. Das Gehäuse der Batterie Ist hingegen prismatisch aufgebaut. Dabei entstehen bei eingeführtem Wickel Leerräume an den Kanten. Dieses Dokument schlägt vor, diese Leerräume als Gehäuseverstärkung zu nutzen, um das Gehäusematerial aus einem leichteren Material, zum Beispiel aus Aluminium, fertigen zu können. In diesem Dokument wird der Leerraum zwar einer sinnvollen Verwendung zugeführt, aber der damit verbundene Verlust an aktivem Material pro Masse wird nicht verhindert.

Die US 7'273'674 B1 zeigt eine primäre Lithiumbatterie mit einer gebogenen Aussenform. Um den Raum im Gehäuse optimal auszunutzen und die Anordnung der positiven Elektrode zur negativen Elektrode sicherzustellen, insbesondere bei bandförmigen Elektroden, wird das Band entsprechend gestaltet. Konkret werden die Bänder stirnseitig mit halbkreisförmigen oder halbelliptischen Kanten ausgebogen. Die in der fertigen Batterie stirnseitig zu liegen kommenden Bereiche sind mit einem elektrochemisch aktiven Material beschichtet. Die jeweilige Stirnseite der Anode ist ebenfalls an die Form der Batterie angepasst.

Die JP 2013 101829 zeigt eine Sekundärzelle mit besonders günstiger Raumeinteilung. Insbesondere sollen redundante elektrische Verkabelungen eingespart werden, Die Batterie ist im Schichtaufbau und verfügt über einen zentralen Ableiterstift. Die Gehäusewandungen sind über eine Brücke und den Ableiterstift so verbunden, dass die Batterie eine verbesserte Stabilität erhält.

In der US 2003/180605 A1 ist eine Batterie mit einem nicht-wässerigen Elektrolyten gezeigt. Grundsätzlich soll eine solche Batterie bereitgestellt werden, welche eine höhere Energiedichte aufweist und unnütze Teile weglässt. Konkret handelt es sich um eine Lithium-Ionen-Sekundärzelle, welche ein gewundenes Elektrodenbündel mit positiven Schichten und negativen Schichten aufweist.

### Darstellung der Erfindung

Aufgabe der Erfindung ist es, eine dem eingangs genannten technischen Gebiet zugehörende Batterie bereitzustellen, welche zudem kostengünstig und effizient ist. Insbesondere soll eine Batterie bereitgestellt werden, welche den Innenraum ihres Gehäuses effizient nutzt.

Die Lösung der Aufgabe ist durch die Merkmale der unabhängigen Ansprüche definiert.

Ein Aspekt der vorliegenden Erfindung betrifft eine Batterie mit Wickelaufbau, umfassend ein Gehäuse, welches ein aktives Volumen V definiert. Das aktive Volumen V setzt sich in einer Ausführungsform aus einem Grundvolumen U abzüglich mindestens eines Einbuchtungsvolumens X zusammen. Das aktive Volumen V setzt sich in einer anderen Ausführungsform aus einem Grundvolumen U abzüglich mindestens eines Ausnehmungsvolumens Y zusammen, respektive setzt sich in einer weiteren Ausführungsform aus einem Grundvolumen U zuzüglich mindestens eines Ausbuchtungsvolumens Z zusammen. Mindestens eine der eben aufgeführten Ausführungsformen ist in der erfindungsgemässen Batterie verwirklicht, es können aber auch zwei in beliebiger Kombination, oder wahlweise auch alle drei Ausführungsformen in einer erfindungsgemässen Batterie verwirklicht werden. Als Grundvolumen kann beispielsweise ein Volumen einer im Aufriss rechteckigen und insgesamt zylindrischen Grundform angesehen werden.

Die erfindungsgemässe Batterie umfasst weiter ein aktives Band, welches aufgewickelt das aktive Volumen V im Wesentlichen auffüllt. Das aktive Band weist mindestens eine Anodenschicht und mindestens eine Kathodenschicht auf. Grundsätzlich sind aufwickelbare aktive Bänder dem Fachmann bekannt. Für die erfindungsgemässe Batterie kann zum Beispiel ein Band, wie in EP 0144757 B1 (GTE Government Systems) gezeigt, verwendet werden. Als Anodenschicht sei erfindungsgemäss Elektrodenmaterial zu verstehen, welches als Elektronenakzeptor fungiert, während als Kathodenschicht erfindungsgemäss das Elektrodenmaterial zu verstehen sei, das als Elektronendonor fungiert. Die aktiven Schichten sind durch einen Separator physisch voneinander getrennt.

Im Sinne der vorliegenden Erfindung seien im Aufriss rechteckige und insgesamt zylindrischen Grundformen für Batterieformen anzuwenden, deren Seitenflächen an den Kanten im Wesentlichen rechtwinklig zueinander verlaufen, wenn Sie, ungeachtet von allfälligen Abschrägungen an den Seitenkanten, in gerader Ebene weiterverlaufen würden. Im Wesentlichen rechtwinklig verlaufen Ebenen zueinander, die einen Winkel von um nicht mehr als +/-15 Grad von 90 Grad abweichend definieren.

Erfindungsgemäss weist das Band in Längsrichtung, insbesondere in der Richtung, in der es aufgewickelt wird, Aussparungen und/oder Einkerbungen auf. Ein abgewickeltes Band kann beispielhaft als im Wesentlichen rechteckiger Streifen angesehen werden, welcher die jeweiligen Elektrodenschichten im Sandwichaufbau aufweist. In diesem Beispiel wäre entweder die Aussenbegrenzung, das heisst die seitliche Kante, mit Kerben versehen und/oder das Band mit Aussparungen versehen. Im Sinne der vorliegenden Erfindung kann sowohl beides, Aussparung oder Kerbe, als auch lediglich Aussparung oder lediglich Kerbe vorhanden sein.

Die Aussparungen und/oder Einkerbungen sind in der erfindungsgemässen Batterie so ausgelegt, dass sie im aufgewickelten Zustand des aktiven Bandes derart übereinander zu liegen kommen, dass eine Summe an Aussparungen und/oder Einkerbungen ein weiteres Volumen P definieren. Das Volumen P entspricht im Wesentlichen der Summe des Einbuchtungsvolumens X und/oder des Ausnehmungsvolumens Y. In einem konkreten Beispiel kann das Band eine Reihe von Aussparungen, also Löchern, aufweisen, welche sich periodisch in Längsrichtung wiederholen. Die Aussparungen kommen beim Aufwickeln des Bandes stets so übereinander zu liegen, dass einzelne Löcher (Aussparungen) des Bandes ein zusammenhängendes Leervolumen definieren. Dieses Volumen P würde in diesem Beispiel einem Ausnehmungsvolumen Y des Batteriegehäuses entsprechen.

Durch die erfindungsgemässe Batterie lässt sich insbesondere eine Batterie mit beinahe beliebiger Gehäuseform optimal mit einem aufgewickelten aktiven Band versehen. So können Batterien mit Ausnehmungen, zum Beispiel torusförmige Batterien, Batterien mit Ausbuchtungen, zum Beispiel konvexe Batterien, oder Batterien mit Einbuchtungen, zum Beispiel konkave Batterien, mit einem aktiven Band unter optimaler Volumenauslastung hergestellt werden. Alle genannten Formen weichen von der rechteckig zylindrischen Grundform ab.

In einer besonderen Ausführungsform weist das aktive Band Einkerbungen in Längsrichtung auf. Die Einkerbungen kommen dann im aufgewickelten Zustand des Bandes derart übereinander zu liegen, dass sie eine von einer zylindrischen Grundform mit dem Grundvolumen U abweichende Wickelform des aktiven Bandes ergeben, nämlich so, dass das aufgewickelte aktive Band das Grundvolumen U und das Ausbuchtungsvolumen Z im Wesentlichen einnimmt. In einer besonderen Ausführungsform nimmt das aufgewickelte Band das Grundvolumen U und das Ausbuchtungsvolumen Z im Wesentlichen so ein, dass ein seitlicher Abstand zwischen einer Schnittkante des aktiven Bandes und der Gehäuseinnenwand eingehalten wird. Bevorzugt ist dieser Abstand gerade so klein, dass ein Kurzschluss zwischen Anode und Kathode oder Dendritbildung verhindert wird. In einer weiteren besonders bevorzugten Ausführungsform ist der Abstand zwischen der Schnittkante der Anodenschicht und der Schnittkante der Kathodenschicht des aktiven Bandes von der Gehäuseinnenwand unterschiedlich, so dass insgesamt ein weiterer Abstand zwischen der Schnittkante der Anodenschicht und der Schnittkante der Kathodenschicht besteht.

In einer besonderen Ausführungsform weist das aktive Band Aussparungen in Längsrichtung auf. Die Aussparungen im aufgewickelten Zustand des Bandes kommen derart übereinander zu liegen, dass sie eine von einer zylindrischen Grundform mit dem Grundvolumen U abweichende Wickelform des aktiven Bandes ergeben, nämlich so, dass das aufgewickelte aktive Band das Grundvolumen U abzüglich des Einbuchtungsvolumens X und/oder abzüglich des Ausnehmungsvolumens Y einnimmt.

In einer besonderen Ausführungsform sind die Aussparungen alle im Wesentlichen gleich gross, so dass das aufgewickelte aktive Band das Grundvolumen U abzüglich des Ausnehmungsvolumens Y einnimmt. In einer besonders bevorzugten Ausführungsform so, dass die Batterie eine im Wesentlichen toroide Form aufweist und das aufgewickelte aktive Band das aktive Volumen V im Wesentlichen auffüllt.

In einer besonderen Ausführungsform sind die Aussparungen unterschiedlich gross, so dass das aufgewickelte aktive Band das Grundvolumen U abzüglich des Einbuchtungsvolumens X einnimmt. In dieser Ausführungsform können die Aussparungen insbesondere in Längsrichtung zunehmen, das heisst insbesondere in der Richtung, in der das Band aufgewickelt wird, so dass die relativ kleinste Aussparung im Inneren des Wickels zu liegen kommt und die relativ grösste Aussparung aussen am Wickel zu liegen kommt. Bevorzugt sind die Aussparungen auf dem aktiven Band so beabstandet, dass sie im aufgewickelten Zustand des Bandes derart übereinander zu liegen kommen, dass mindestens ein zusammenhängendes Volumen durch die Aussparungen definiert wird. Beim Aufwickeln des Bandes wird nämlich mit fortschreitender Dicke des Wickels ein grösserer Abstand zwischen den einzelnen Aussparungen und/oder Kerben erforderlich, um im aufgewickelten Zustand übereinander zu liegen zu kommen. Abstand und Grösse der Aussparungen und/oder Kerben zu ermitteln, liegt im Ermessen des Fachmanns und kann anhand mathematischer Berechnung ausgehend von der zu füllenden Batterieform berechnet werden. In einem einfachsten Beispiel kann eine Abweichung von einer rechteckig zylindrischen Grundform mit einem Volumen U als Abweichungsvolumen X, Y oder Z definiert werden. Dieses Abweichungsvolumen X, Y oder Z wird dann auf einen Wickel mit dem Grundvolumen U übertragen und die erforderliche Aussparung, Kerbe und/oder Ausbuchtung wird anhand einer Schichtdicke und einer Bandlänge des aktiven Bandes berechnet.

In einer besonderen Ausführungsform umfasst das aktive Band mindestens einen Separator zwischen jeder mindestens einen Anodenschicht und mindestens einen Kathodenschicht. Ein Separator erfüllt gemäss der vorliegenden Erfindung die Funktion einer räumlichen, d.h. insbesondere physischen, und elektrischen Trennschicht zwischen zwei Elektrodenschichten, einer Schicht mit Anodenmaterial und einer Schicht mit Kathodenmaterial. Dabei sollte ein Separator durchlässig für Ionen sein. In seiner einfachsten Ausführungsform umfasst der Separator ein poröses Material, welches zusammen mit der Schicht mit Anodenmaterial und der Schicht mit Kathodenmaterial in einer Elektrolytlösung getränkt ist. Geeignet sind unter anderem mikroporöse Kunststoffe, Vliese, Glasfaser, Polyethylen, etc..

In einer besonderen Ausführungsform ist die Batterie eine durch das erfindungsgemässe Verfahren hergestellte Batterie. Eine solche Batterie kann hergestellt sein, indem ein aktives Band, welches eine Anodenschicht, eine Kathodenschicht und einen Separator umfasst, bereitgestellt wird. Das aktive Band wird um die Ableiter aufgewickelt. Dazu werden die Anodenschicht am Anodenableiter und die Kathodenschicht am Kathodenableiter fixiert. Das aktive Band wird anschliessend mit einer definierten Zugkraft gespannt und gewickelt. Die Zugkraft setzt am Separator an, wobei der Separator als geschlossenes Band ausgestaltet ist. Im Sinne der vorliegenden Erfindung liegt der Separator als geschlossenes Band vor, wenn er einen ringförmigen Aussen- und Innenumfang aufweist.

Ein weiterer Aspekt der vorliegenden Erfindung betrifft ein Verfahren zur Herstellung einer Batterie im Wickelaufbau, insbesondere einer Batterie wie oben geschildert. Das Verfahren umfasst die folgenden Schritte. Ein Gehäuse zur Aufnahme eines aktiven Bandes wird bereitgestellt. Das aktive Band wird bereitgestellt und in einer ersten Ausführungsform wird mindestens eine Kerbe entlang der Längsseite, insbesondere in Wickelrichtung, des aktiven Bandes ausgeschnitten. In einer weiteren Ausführungsform wird mindestens eine Ausnehmung entlang der Längsseite, insbesondere in Wickelrichtung, des aktiven Bandes ausgeschnitten. Mindestens eine dieser Ausführungsformen wird im erfindungsgemässen Verfahren durchgeführt. Auch beide Schritte können im erfindungsgemässen Verfahren durchgeführt werden. Das Ausschneiden geschieht jeweils in einem vordefinierten Muster, nämlich so, dass zusammengehörende Aussparungen und/oder Kerben im aufgewickelten Zustand übereinander zu liegen kommen.

Ein weiterer Aspekt der vorliegenden Erfindung betrifft ein Verfahren zur Herstellung einer oben genannten Batterie, indem ein aktives Band mit einer Anodenschicht und einer Kathodenschicht und einem Separator bereitgestellt wird. Das aktive Band wird um die Ableiter aufgewickelt, so dass die Anodenschicht am Anodenableiter und die Kathodenschicht am Kathodenableiter fixiert werden, und die Anodenschicht und die Kathodenschicht um die Ableiter in einer Wickelrichtung mit einer definierten Zugkraft gewickelt werden. Die Zugkraft für das Wickeln setzt am Separator an. Der Separator kann zum Beispiel als offenes Band an einem der beiden Ableiter, vorzugsweise am Anodenableiter, fixiert sein, so dass zwei lose Enden des Bandes distal, das heisst vom Ableiter entfernt, zu liegen kommen. Die definierte Zugkraft kann dann zum Beispiel an diesen beiden losen Enden angesetzt werden. In einer besonders bevorzugten Ausführungsform wird die Zugkraft an beiden diesen losen Enden gleich stark angesetzt.

In einer besonderen Ausführungsform wird der Separator als geschlossenes Band gewickelt. Im Sinne der vorliegenden Erfindung liegt der Separator als geschlossener Band vor, wenn er einen ringförmigen Aussen- und Innenumfang aufweist. Das Wickeln kann zum Beispiel durch die Rotation der Ableiter und/oder eines Zugorgans um eine Rotationsachse zwischen den Ableitern erfolgen.

Durch das erfindungsgemässe Verfahren wird es möglich, die nötige Spannkraft aufzubringen, damit die Ausnehmungen und/oder Einkerbungen des aktiven Bandes dergestalt übereinander zu liegen kommen, so dass sie die Ausbuchtungen, Einbuchtungen und/oder Ausnehmungen der Batterieform frei lassen. So kann von der zylindrischen, im Querschnitt rechteckigen Batterieform abgewichen werden, und der zur Verfügung stehende Raum trotzdem optimal mit aktivem Material bestückt werden. Durch den geschlossenen Separator lässt sich nicht nur ausreichend präzise Zugkraft für eine straffe Wicklung aufbringen, auch einem Verschieben der einzelnen aktiven Schichten Anoden- respektive Kathodenschicht und Separator zueinander wird vorgebeugt.

Erfindungsgemäss wird das aktive Band aufgewickelt, so dass eine Gruppe von Kerben und/oder eine Gruppe von Ausnehmungen derart übereinander zu liegen kommt, dass mindestens ein zusammenhängendes dreidimensionales Leervolumen gebildet wird.

Das aufgewickelte Band wird in ein Gehäuse eingebracht, so dass das Gehäuse im Wesentlichen vom aufgewickelten aktiven Band ausgefüllt wird.

In einer besonderen Ausführungsform wird der Separator als Band an einem Ableiter, vorzugsweise am Anodenableiter, und an einem Zugorgan eingehängt, welches ausgelegt ist, die definierte Zugkraft aufzubringen. In einer besonderen Ausführungsform umfasst das aktive Band mindestens eine Schicht Kathodenmaterial und mindestens eine Schicht Anodenmaterial und einen Separator.

In einer besonderen Ausführungsform wird das Gehäuse mit einem Deckel verschlossen.

In einer besonderen Ausführungsform ist das Ausschneiden ein Stanzen und/oder Laserschneiden.

In einer besonderen Ausführungsform wird das aktive Band gespannt und dann aufgewickelt.

In einer besonderen Ausführungsform umfasst das aktive Band mindestens einen Separator, insbesondere zwischen mindestens einer Schicht Kathodenmaterial und mindestens einer Schicht Anodenmaterial. In einer weiteren besonderen Ausführungsform wird nur von der mindestens einen Schicht Kathodenmaterial und der mindestens einen Schicht Anodenmaterial mindestens eine Kerbe und/oder Ausnehmung ausgeschnitten.

In einer besonderen Ausführungsform wird die Anodenschicht mit dem Anodenableiter verschweisst und die Kathodenschicht mit dem Kathodenableiter verschweisst. Der Separator wird als geschlossenes Band an einem Ende am Anodenableiter eingehängt und am anderen Ende an einem Zugorgan eingehängt. Der Separator wird mit einer definierten Zugkraft gespannt und in Wickelrichtung um den Anodenableiter gewickelt, so dass das gesamte aktive Band, d. h. Anodenschicht, Kathodenschicht und zwischengelagerter Separator, in mehreren Lagen um die Ableiter gewickelt wird. Die Zugkraft wird so eingestellt, dass im aufgewickelten Zustand des aktiven Bandes eine Summe an Aussparungen und/oder Einkerbungen derart übereinander zu liegen kommen, dass sie ein Volumen P definieren. Das Volumen P entspricht im Wesentlichen der Summe des Einbuchtungsvolumens X und/oder des Ausnehmungsvolumens Y der Gehäuseform der Batterie. In einer besonders bevorzugten Ausführungsform findet das Wickeln statt, indem die Ableiter um ihre eigene Achse rotiert werden, d. h. vorzugsweise um eine Rotationsachse im geometrischen Mittelpunkt zwischen den Ableitern und parallel zu diesen.

In einer besonderen Ausführungsform wird beim Wickeln das aktive Band über Wannen geführt, um das Band beim Wickelvorgang seitlich zu führen.

In einer besonderen Ausführungsform wird nach Abschluss des Wickelvorgangs das geschlossene Band des Separators geöffnet, insbesondere indem das äusserste Ende des Wickels abgeschnitten wird.

In einer besonderen Ausführungsform sind die Ableiter auf einem Gehäuseboden befestigt, welcher später eine Gehäusewand der Batterie bildet. Besonders bevorzugt werden der Gehäuseboden und die Ableiter für den Wickelprozess auf einer Spule montiert und rotiert. Das Gehäuse kann anschliessend mit einem Gehäusedeckel gasdicht verschlossen werden.

Alle genannten besonderen Ausführungsformen aller Aspekte der vorliegenden Erfindung können vereinzelt oder in beliebiger Kombination in einer jeweiligen erfindungsgemässen Ausführungsform verwirklicht sein, sofern sie nicht gegenseitig ausschliesslich sind.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: zeigt schematisch eine Batterie in Wickelform aus dem Stand der Technik mit einem zylindrischen Gehäuse;
- Fig. 1b: die Batterie aus Fig. 1a schematisch in Aufsicht
- Fig. 2a: zeigt schematisch eine Batterie in Wickelform aus dem Stand der Technik mit einem konvex ausgebuchteten Gehäuse;
- Fig. 2b: die Batterie aus Fig. 2a schematisch in Aufsicht
- Fig. 3a: zeigt schematisch eine erfindungsgemässe Batterie in Wickelform mit einem konvex ausgebuchteten Gehäuse;
- Fig. 3b: die Batterie aus Fig. 3a schematisch in Aufsicht;
- Fig. 3c: Vergrösserte schematische Darstellung einer Kante der Ausbuchtung von Fig. 3a;
- Fig. 4a: zeigt schematisch eine erfindungsgemässe Batterie in Wickelform mit einem konvex ausgebuchteten und konkav eingebuchteten Gehäuse;
- Fig. 4b: die Batterie aus Fig. 4a schematisch in Aufsicht;
- Fig. 5a: zeigt schematisch eine erfindungsgemässe Batterie in Wickelform mit einem Gehäuse mit einer zentralen Ausnehmung;
- Fig. 5b: die Batterie aus Fig. 5a schematisch in Aufsicht;
- Fig. 6a: zeigt schematisch eine erfindungsgemässe Batterie in Wickelform mit einem trapezoiden Gehäuse;;
- Fig. 6b: die Batterie aus Fig. 6a schematisch in Aufsicht;
- Fig. 7: zeigt schematisch ein aktives Band aus dem Stand der Technik;
- Fig. 8: zeigt schematisch ein aktives Band für eine Batterie wie in Fig. 4a dargestellt;
- Fig. 9: zeigt schematisch ein aktives Band für eine Batterie wie in Fig. 5a dargestellt;
- Fig. 10: zeigt schematisch ein aktives Band für eine Batterie wie in Fig. 6a dargestellt;
- Fig. 11: zeigt schematisch einen Schritt eines erfindungsgemässen Herstellungsverfahrens, und
- Fig. 12: zeigt schematisch einen Schritt eines alternativen erfindungsgemässen Herstellungsverfahrens.

Grundsätzlich sind in den Figuren gleiche Teile mit gleichen Bezugszeichen versehen.

### Wege zur Ausführung der Erfindung

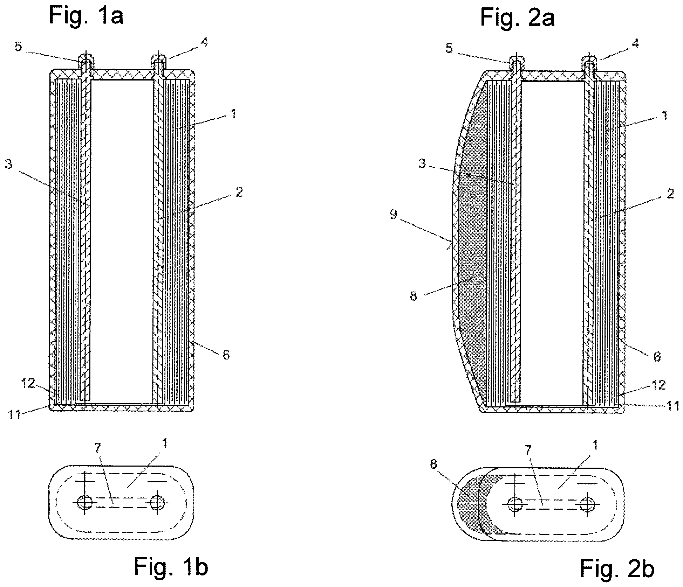

In Fig. 1 wird ein Querschnitt im Aufriss durch eine konventionelle Lithium-Ionen Batterie im Wickelaufbau gezeigt. Die Batterie umfasst einen Wickel 1 aus einer Anodenschicht 11, einer Kathodenschicht 12 und einem Separator (nicht gezeigt). Die Batterie hat zudem je einen Anodenableiter 2 und einen Kathodenableiter 3. Zur elektrischen Verbindung dient ein Minus Kontakt 4 und ein Plus Kontakt 5. Das Gehäuse 6 ist für die Batterie formbestimmend und weist einen rechteckigen Querschnitt in Seitenaufsicht auf. Im vorliegenden Fall ist das Gehäuse 6 zylinderförmig und der Wickel 1 wird im Wesentlichen vollständig vom Gehäuse 6 umschlossen. In der Aufsicht Fig. 1b sieht man einen Freiraum 7 zwischen den Ableitern, welcher als Elektrolytreservoir verwendet wird. Der Wickel 1 passt passgenau in das Gehäuse, womit das verfügbare Volumen optimal genutzt wird.

Fig. 2a zeigt eine Batterie deren Form von der Standard-Zylinderform abweicht. Die Batterie umfasst einen Wickel 1 aus einer Anodenschicht 11, einer Kathodenschicht 12 und einem Separator. Die Batterie hat zudem je einen Anodenableiter 2 und einen Kathodenableiter 3. Zur elektrischen Verbindung dient ein Minus Kontakt 4 und ein Plus Kontakt 5. Das Gehäuse 6 weist eine konvexe Ausbuchtung 9 auf. Dadurch entsteht ein Leervolumen 8, welches nicht genutzt wird. Das Leervolumen 8 ist auch in der Aufsicht der Fig. 2b sichtbar, wo zusätzlich ein Freiraum 7 zwischen den Ableitern als Elektrolytreservoir ersichtlich ist.

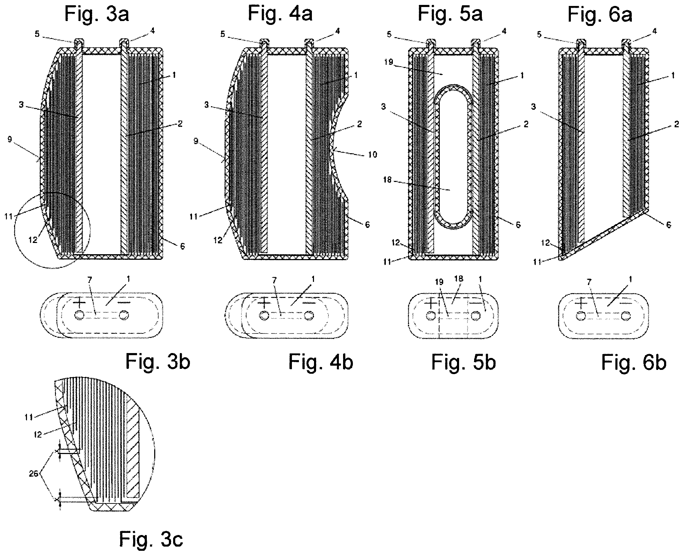

Fig. 3a zeigt eine erfindungsgemässe Batterie mit einer konvexen Ausbuchtung 9. Das Gehäuse 6 besteht aus gasdichtem, elektrolytbeständigem Kunststoff, worin ein Wickel 1 mit einer konvexen Aussenform untergebracht ist. Die konvexe Aussenform wird durch eine Ausbuchtung 9 des Gehäuses 6 erzeugt. Der Wickel weist ein Anodenband 11 und ein Kathodenband 12 auf, welche durch einen Separator (nicht gezeigt) voneinander beabstandet sind. In der Mitte des Gehäuses 6 befinden sich die Ableiter, ein Kathodenableiter 3 und ein Anodenableiter 2, welche jeweils als Ansatzpunkte für das Kathodenband 12 respektive das Anodenband 11 dienen. Die Ableiter terminieren wiederum in den Pluskontakt 5 respektive den Minuskontakt 4 der Batterie. Die vollständige Volumenausnutzung durch den Wickel 1 ist ebenfalls in der Aufsicht 3a ersichtlich.

Die erfindungsgemässe Batterie bietet die volle, durch das Batterievolumen zur Verfügung stehende Kapazität ungeachtet der Batterieform. Dies wird besonders deutlich, wenn man die Aufsicht, welche in der Fig. 3b gezeigt wird, mit der Fig. 2a vergleicht. In der Fig. 3b ist ebenfalls ein Freiraum 7 zwischen den Ableitern als Elektrolytreservoir ersichtlich, aber ansonsten wird das gesamte Volumen der Batterie vom Wickel 1 effizient genutzt.

Die Fig. 3c illustriert einen Teilabschnitt, der in der Fig. 3a mit einem Umkreis gekennzeichnet ist, in einer Vergrösserung. Die Vergrösserung zeigt die untere linke Ecke aus Sicht des Betrachters, welche konvex von der unteren Kante wegläuft und eine Ausbuchtung bildet. Die Fig. 3c illustriert die Anordnung der gewickelten Kathodenschicht 12 und Anodenschicht 11 des aktiven Bandes. Zur Gehäuseinnenwand hin sind die Schnittkanten der Kathodenschicht 12 und Anodenschicht 11 unterschiedlich beabstandet, so dass insgesamt ein Abstand 26 zwischen der Anodenschicht 11 und der Kathodenschicht 12 besteht. Es ist zu beachten, dass sich zwischen den Schichten gegensätzlicher Ladung jeweils ein Separator befindet, der in dieser Darstellung aber nicht gezeigt ist.

In der erfindungsgemässen Batterie 4a wird zusätzlich zur konvexen Ausbuchtung 9, wie in der Fig. 3a bereits gezeigt, eine konkave Einbuchtung 10 berücksichtigt. Der Wickel 1 weist durch Ausnehmungen und Kerben entlang seiner Längsachse, also in Wickelrichtung, eine Wickelform auf, die den entsprechenden Gehäuseabweichungen von einer rechteckig zylindrischen Grundform Rechnung tragen. Das Innenvolumen der Batterie wird effizient genutzt, indem der Wickel 1 diesen im Wesentlichen vollständig einnimmt, wie auch in Fig. 4b gezeigt. Die konvexe Ausbuchtung 9 und die konkave Einbuchtung 10 können durch die Form des Gehäuses 6 bedingt sein, welches im vorliegenden Beispiel aus gasdichtem, elektrolytbeständigem Kunststoff besteht. In der Mitte der Batterie 4a sind die Ableiter für die Anode 2 und Kathode 3 untergebracht, welche in den Kontakten, dem Minus- 4 respektive dem Pluskontakt 5, terminieren. Im aktiven Wickel 1, bestehend aus Anodenschicht 11 und Kathodenschicht 12 sowie zwischengelagertem Separator, wird analog zur Fig. 3a auf einen Abstand zwischen den Schnittkanten der Anodenschicht 11 und der Kathodenschicht 12 geachtet.

Die in Fig. 5a gezeigte erfindungsgemässe Ausführungsform weist eine insgesamt toroidale Form auf, das heisst eine "Donut-Form". In der Mitte der Batterie befindet sich eine Aussparung 18, welche eine Queröffnung durch die torusförmige Batterie bildet. Ebenfalls ersichtlich ist dies in der Aufsicht der zugehörigen Fig. 5b, wo der Wickel den verfügbaren aktiven Raum effizient nutzt und die Aussparung 18 und ein Freiraum 19 im Bereich der Ableiter ersichtlich sind. Die entsprechende Aufsicht ist in der Fig. 5b gezeigt, wobei die Queröffnung 18 und der Freiraum 19 ebenfalls dargestellt sind.

Eine weitere Batterieform, welche durch die Lehre der vorliegenden Erfindung in ihrer Effizienz verbessert werden kann, ist in der Fig. 6a gezeigt. Die Batterie weist eine im Aufriss Querschnitt rechteckige Grundform auf, wobei die Kanten nicht parallel zueinander stehen. So entsteht ein trapezoider Seitenquerschnitt und die endgültige Form der Batterie ist von der zylindrischen Form der Fig. 1 verschieden. Die Aufsicht einer Batterie nach Fig. 6a ist in der Figur 6b dargestellt und unterscheidet sich aus dieser Perspektive nicht von einer Batterie nach Fig. 1a.

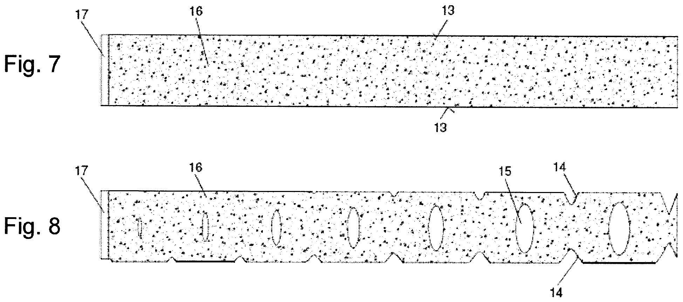

In Fig. 7 ist ein aktives Band ersichtlich, welches in konventionellen Batterien aus dem Stand der Technik verwendet wird. Das Band weist einen unbeschichteten Teil 17 auf, welcher als Befestigungs- und/oder Kontaktierungszone an den Ableiter dient und erstreckt sich als rechteckiges Band in Längsrichtung vom unbeschichteten Teil 17 als beschichtetes Band 16. Die Seitenkanten 13 des rechteckigen Bandes weisen keine Einschnitte oder Kerben auf. Ein solches Band wurde zum Beispiel in den Fig. 1a und 2a verwendet. Das Band ist geeignet, eine im Querschnitt rechteckförmige, zylindrische Batterie wie in Fig.1a im Wesentlichen zu füllen, hinterlässt aber bereits bei einer geringfügig abweichenden Grundform wie in der Fig. 2a ungenutzte Leerräume.

Die Fig. 8 zeigt ein aktives Band für eine erfindungsgemässe Batterie, im vorliegenden Beispiel für eine Batterie wie in der Fig. 4 gezeigt. Das Band weist einen unbeschichteten Teil 17 auf, welcher als Befestigungs- und/oder Kontaktierungszone an den Ableiter dient und erstreckt sich als im Wesentlichen rechteckiges Band in Längsrichtung vom unbeschichteten Teil 17 als beschichtetes Band 16. Das Band weist aber in Längsrichtung, das heisst in Wickelrichtung, unregelmässig beabstandete Aussparungen 15 auf, die in Längsrichtung zunehmen. Die unregelmässige Beabstandung rührt daher, dass durch den Wickelvorgang stets ein grösseres Volumen vom Band abgedeckt werden muss. Die Zunahme der Grösse der Aussparung dient dazu, eine konusförmige Einbuchtung des Gehäuses zu akkomodieren, in diesem besonderen Fall die Einbuchtung 10 der Batterie aus Fig. 4. Das aktive Band weist zudem in Längsrichtung, das heisst in Wickelrichtung, in der Grösse zunehmende Kerben in ebenfalls unregelmässigen Abständen auf. Die Unregelmässigkeit der Abstände der Kerben ergibt sich aus dem gleichen Grund wie bei den Aussparungen, nämlich durch die fortschreitende Wicklung des Bandes wird proportional mehr Bandfläche benötigt. Die Einkerbungen dienen dazu eine Ausbuchtung einer konvexen Gehäuseform mit aktivem Material möglichst vollständig zu füllen. In diesem besonderen Fall wird die Ausbuchtung 9 der Batterie aus Fig. 4 dadurch gefüllt. Durch die Kerben 14 entsteht beim Aufwickeln eine konusförmige Ausbuchtung vom ansonsten zylindrischen Wickel, welche die entsprechende Ausbuchtung eines Gehäuses optimal füllt. Die Kerben 14 können zu einer Längsachse des aktiven Bandes symmetrisch oder aber auch asymmetrisch sein, wenn zum Beispiel das aktive Band nicht vollständig zentriert in das Gehäuse kommt. Dies kann dann der Fall sein, wenn das Gehäuse noch weiteren Raum für Ableiter und Kontakte einseitig zur Verfügung stellen muss. Im vorliegenden Beispiel sind die Kerben nicht vollständig symmetrisch.

Beim Wickelprozess wird das Band mit einer bestimmten Spannung gewickelt und zwar so, dass zusammengehörige Aussparungen und/oder Kerben ein zusammenhängendes Volumen ergeben.

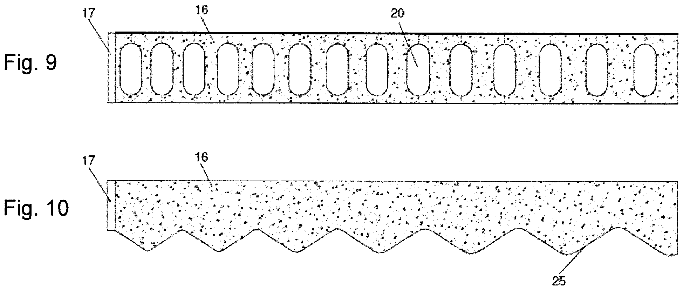

In Fig. 9 wird ein aktives Band gezeigt, welches für eine Batterie mit torusförmigem Grundkörper geeignet ist, wie in der Fig. 5 gezeigt. Das Band weist in unregelmässigen Abständen Aussparungen 20 auf, welche geeignet sind die Queröffnung 18 des Gehäuses der Fig. 5 aufzunehmen. Die Abstände der Aussparungen 20 nehmen in Längsrichtung beginnend vom unbeschichteten Teil 17, welcher als Befestigungs- und/oder Kontaktierungszone für die Ableiter dient, zu. Dies ist durch die zunehmende Dicke des aktiven Bandes beim Wickeln begründet.

In der Fig. 10 wird weiter ein für eine Batterie nach Fig. 6 geeignetes Band gezeigt. Das aktive Band 16 weist in Längsrichtung, das heisst in der Richtung, in der das Band gewickelt wird, wobei beim fertigen Wickel ein unbeschichteter Teil 17 als Ableiter-Befestigungs- und/oder Kontaktierungszone innen zu liegen kommt, Einkerbungen 25 auf.

Diese Einkerbungen 25 nehmen im längsseitigen Verlauf des aktiven Bandes 16 an Grösse zu und dienen dazu, den trapezförmigen Winkel der Batterie nach Fig. 6 zu füllen.

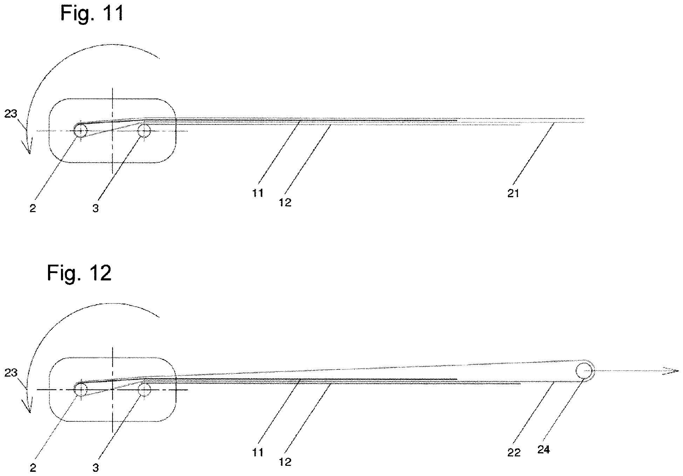

Fig. 11 zeigt schematisch, wie ein Verfahren zum Wickeln von aktiven Bändern für Batterien gemäss der vorliegenden Erfindung durchgeführt wird. Eine Batterie weist einen Anodenableiter 2 und eine Kathodenableiter 3 auf. An den Anodenableiter 2 wird eine Anodenschicht 11 befestigt, indem diese über eine Schweisszone mit dem Ableiter 2 verschweisst wird. An den Kathodenableiter 3 wird eine Kathodenschicht 13 befestigt. Anschliessend wird ein Separator 21, ebenfalls als Band zwischen die beiden Schichten gebracht und gegen aussen, also von der Batterie distal, offen platziert. Der Separator ist so über den Anodenableiter 2 eingehängt. Ein Zugorgan fasst nun beide distal freie, offene Enden des Separators und wickelt das ganze aktive Band in Wickelrichtung um die beiden Ableiter. Gewickelt wird, indem das Separatorband 21 mit einer definierten Zugkraft gespannt wird und die Ableiter um eine Rotationsachse in Wickelrichtung 23 rotiert werden. Das aktive Band wird somit aufgewickelt und die entsprechenden Ausnehmungen, Aussparungen oder Einkerbungen kommen dank der präzis ansetzbaren Zugkraft an den beiden Separatorenden korrekt übereinander zu liegen.

Ein alternatives erfindungsgemässes Verfahren wird in der Fig. 12 schematisch gezeigt. Die Batterie weist einen Anodenableiter 2 und eine Kathodenableiter 3 auf. An den Anodenableiter 2 wird eine Anodenschicht 11 befestigt, indem diese über eine Schweisszone mit dem Ableiter 2 verschweisst wird. An den Kathodenableiter 3 wird eine Kathodenschicht 13, mutatis mutandis befestigt.

Der Separator 22 liegt im erfindungsgemässen Verfahren als Band vor. Der Separator 22 kann zu diesem Zweck bereits als integrales Band gefertigt sein oder nachträglich in einem Verbindungsschritt zu einem geschlossenen Band verbunden werden. Das proximale Ende des Separators 22 wird über den Anodenableiter 2 eingehängt, während das distale Ende des Separators 22 im Zugorgan 24 eingehängt wird. Das Zugorgan 24 setzt eine definierte Spannung auf. Anodenableiter 2 und Kathodenableiter 3 werden in diesem konkreten Beispiel dann im Gegenuhrzeigersinn rotiert. Die Rotationsachse verläuft dabei genau durch die Mitte, zwischen dem Anodenableiter 2 und dem Kathodenableiter 3 und verläuft im vorliegenden Beispiel durch den Kreuzungspunkt der in der Fig. 12 gezeichneten gestrichelten Linien. Bei der Rotationsbewegung wird das aktive Band, umfassend die Anodenschicht 2, die Kathodenschicht 3 und den Separator, um die beiden Ableiter 2, 3 gewickelt. Durch die Halterung des Separators am Zugorgan kann die erforderliche Kraft optimal eingestellt und aufrechterhalten werden, um sicherzustellen, dass alle Aussparungen und/oder Einkerbungen zusammenhängende Leervolumen am fertigen Wickel bilden.

Der resultierende Wickel kann anschliessend in einem beinahe beliebig geformten Gehäuse verstaut werden.

Zusammenfassend ist festzustellen, dass die genannten Beispiele nicht als Beschränkung des Schutzes zu verstehen sind, sondern lediglich als exemplarische Ausführungen des erfinderischen Gedankens.

## Patentansprüche

1. Batterie mit Wickelaufbau umfassend
a) ein Gehäuse (6), welches ein aktives Volumen V definiert, wobei sich das aktive Volumen **V** zusammensetzt aus einem Grundvolumen **U** abzüglich mindestens eines Einbuchtungsvolumens **X** und/oder abzüglich mindestens eines Ausnehmungsvolumens **Y** und/oder zuzüglich mindestens eines Ausbuchtungsvolumens **Z**;
b) ein aktives Band (1), welches aufgewickelt das aktive Volumen V im Wesentlichen auffüllt und mindestens eine Anodenschicht (11) und mindestens eine Kathodenschicht (12) umfasst, und
c) das aktive Band (1) in Längsrichtung, insbesondere in der Richtung in der es aufgewickelt wird, Aussparungen (15; 20) und/oder Einkerbungen (14; 25) aufweist, welche so ausgestaltet sind, dass die Aussparungen (20) und/oder Einkerbungen (14; 25) im aufgewickelten Zustand des aktiven Bandes (1) derart übereinander zu liegen kommen, dass eine Summe an Aussparungen (20) und/oder Einkerbungen (14; 25) ein Volumen **P** definieren, weiches im Wesentlichen der Summe des Einbuchtungsvolumens **X** und/oder des Ausnehmungsvolumens **Y** entspricht, und wobei
d) das aktive Band (1) Aussparungen (15; 20) in Längsrichtung aufweist und die Aussparungen (15; 20) im aufgewickelten Zustand des Bandes (1) derart übereinander zu liegen kommen, dass sie eine von einer zylindrischen Grundform mit dem Grundvolumen **U** abweichende Wickelform des aktiven Bandes (1) ergeben, nämlich so, dass das aufgewickelte aktive Band (1) das Grundvolumen **U** abzüglich des Einbuchtungsvolumens **X** und/oder abzüglich des Ausnehmungsvolumens **Y** einnimmt, **dadurch gekennzeichnet, dass**
die Aussparungen (15) unterschiedlich gross sind.

2. Batterie gemäss Anspruch 1, wobei das aktive Band (1) Einkerbungen (14; 25) in Längsrichtung aufweist und die Einkerbungen (14; 25) im aufgewickelten Zustand des Bandes (1) derart übereinander zu liegen kommen, dass sie eine von einer zylindrischen Grundform mit dem Grundvolumen U abweichende Wickelform des aktiven Bandes (1) ergeben, nämlich so, dass das aufgewickelte aktive Band (1) das Grundvolumen **U** und das Ausbuchtungsvolumen Z im Wesentlichen einnimmt.

3. Batterie gemäss Anspruch 1, wobei die Aussparungen (15) in Längsrichtung zunehmen, und insbesondere in der Richtung in der das Band aufgewickelt wird, zunehmen, so dass das aufgewickelte aktive Band (1) das Grundvolumen U abzüglich des Einbuchtungsvolumens **X** einnimmt.

4. Batterie gemäss einem der Ansprüche 1 bis 3 , wobei die Aussparungen (15; 20) auf dem aktiven Band so beabstandet sind, dass sie im aufgewickelten Zustand des Bandes (1) derart übereinander zu liegen kommen, dass mindestens ein zusammenhängendes Volumen durch die Aussparungen (15; 20) definiert wird.

5. Batterie gemäss einem der Ansprüche 1 bis 4, umfassend mindestens einen Separator (22) zwischen jeder mindestens einen Anodenschicht (11) und mindestens einen Kathodenschicht (12) umfasst.

6. Batterie gemäss Anspruch 5, wobei ein seitlicher Abstand zwischen einer Schnittkante des aktiven Bandes (1) und einer Gehäuseinnenwand des Gehäuses (6) eingehalten wird und wobei der Abstand zwischen der Schnittkante der Anodenschicht (11) und der Schnittkante der Kathodenschicht (12) des aktiven Bandes von der Gehäuseinnenwand unterschiedlich ist, so dass insgesamt ein weiterer Abstand (26) zwischen der Schnittkante der Anodenschicht (11) und der Schnittkante der Kathodenschicht (12) besteht.

7. Verfahren zur Herstellung einer Batterie im Wickelaufbaugemäss Anspruch 1, umfassend die Schritte:
a) Bereitstellen eines aktiven Bandes (1) mit einer Anodenschicht (11) und einer Kathodenschicht (12) und einem Separator (22), weicher zwischen der Anodenschicht (11) und der Kathodenschicht (12) liegt;
b) Aufwickeln des aktiven Bandes um die Ableiter dergestalt, dass die Anodenschicht (11) am Anodenableiter (2) und die Kathodenschicht (12) am Kathodenableiter (3) fixiert werden und die Anodenschicht (11) und die Kathodenschicht (12) um die Ableiter in einer Wickelrichtung (23) mit einer definierten Zugkraft gewickelt werden, **dadurch gekennzeichnet, dass**
die Zugkraft für das Wickeln am Separator (22) ansetzt.

8. Verfahren gemäss Anspruch 7, wobei der Separator (22) als geschlossenes Band gewickelt wird.

9. Verfahren zur Herstellung einer Batterie gemäss Anspruch 7 oder 8, wobei der Separator (22) als Band an einem Ableiter (2), vorzugsweise am Anodenableiter, und an einem Zugorgan (24) eingehängt wird, welches ausgelegt ist, die definierte Zugkraft aufzubringer.

10. Verfahren gemäss einem der Ansprüche 7 bis 9, weiter umfassend die Schritte:
c) Bereitstellen eines Gehäuses zur Aufnahme des aktiven Bandes;
d) Ausschneiden von mindestens einer Kerbe entlang der Längsseite, insbesondere in Wickelrichtung, des aktiven Bandes und/oder von mindestens einer Ausnehmung entlang der Längsseite, insbesondere in Wickelrichtung, des aktiven Bandes, jeweils in einem vordefinierten Muster;
e) Aufwickeln des aktiven Bandes, so dass eine Gruppe von Kerben und/oder eine Gruppe von Ausnehmungen derart übereinander zu liegen kommt, dass mindestens ein zusammenhängendes dreidimensionales Leervolumen gebildet wird;
f) Einführen des aufgewickelten aktiven Bandes in das Gehäuse, so dass das Gehäuse im Wesentlichen vom aufgewickelten aktiven Band ausgefüllt wird.

11. Verfahren gemäss einem der Ansprüche 7 bis 10, wobei das aktive Band mindestens eine Schicht Kathodenmaterial und mindestens eine Schicht Anodenmaterial umfasst.

12. Verfahren nach Anspruch 10, wobei das Gehäuse mit einem Deckel verschlossen wird.

13. Verfahren nach einem der Ansprüche 7 bis 12, wobei das Ausschneiden ein Stanzen und/oder Laserschneiden ist.

## Claims

1. Battery with a wound construction comprising
a) a housing (6) which defines an active volume V, wherein the active volume V is made up of a basic volume V minus at least one concavity volume X and/or minus at least one recess volume Y and/or plus at least one convexity volume Z;
b) an active strip (1) which, when wound up, substantially fills the active volume V and comprises at least one anode layer (11) and at least one cathode layer (12), and
c) the active strip (1) has, in the longitudinal direction, in particular in the direction in which it is wound up, cutouts (15; 20) and/or indentations (14; 25) which are designed such that the cutouts (20) and/or indentations (14; 25), in the wound-up state of the active strip (1), come to lie one above the other in such a way that a sum of cutouts (20) and/or indentations (14; 25) define a volume P which corresponds substantially to the sum of the concavity volume X and/or the recess volume Y, and wherein
d) the active strip (1) has cutouts (15; 20) in the longitudinal direction, and the cutouts (15; 20), in the wound-up state of the strip (1), come to lie one above the other in such a way that they produce a wound shape of the active strip (1), which wound shape differs from a cylindrical basic shape with the basic volume U, specifically such that the wound-up active strip (1) occupies the basic volume U minus the concavity volume X and/or minus the recess volume Y, **characterized in that**
the cutouts (15) have different sizes.

2. Battery according to Claim 1, wherein the active strip (1) has indentations (14; 25) in the longitudinal direction, and the indentations (14; 25), in the wound-up state of the strip (1), come to lie one above the other in such a way that they produce a wound shape of the active strip (1), which wound shape differs from a cylindrical basic shape with the basic volume U, specifically such that the wound-up active strip (1) essentially occupies the basic volume U and the convexity volume Z.

3. Battery according to Claim 1, wherein the cutouts (15) increase in the longitudinal direction, and in particular in the direction in which the strip is wound up, so that the wound-up active strip (1) assumes the basic volume U minus the concavity volume X.

4. Battery according to one of Claims 1 to 3, wherein the cutouts (15, 20) on the active strip are spaced apart such that, in the wound-up state of the strip (1), they come to lie one above the other in such a way that at least one continuous volume is defined by the cutouts (15; 20).

5. Battery according to one of Claims 1 to 4, comprising at least one separator (22) between each at least one anode layer (11) and at least one cathode layer (12).

6. Battery according to Claim 5, wherein a lateral distance between a cut edge of the active strip (1) and a housing inner wall of the housing (6) is maintained, and wherein the distance between the cut edge of the anode layer (11) and the cut edge of the cathode layer (12) of the active strip from the housing inner wall are different, so that there is a further distance (26) between the cut edge of the anode layer (11) and the cut edge of the cathode layer (12) overall.

7. Method for producing a battery of wound construction according to Claim 1, comprising the steps of:
a) providing an active strip (1) having an anode layer (11) and a cathode layer (12) and a separator (22) which is situated between the anode layer (11) and the cathode layer (12);
b) winding up the active strip around the outgoing conductor in such a way that the anode layer (11) is fixed to the anode outgoing conductor (2) and the cathode layer (12) is fixed to the cathode outgoing conductor (3), and the anode layer (11) and the cathode layer (12) are wound around the outgoing conductors in a winding direction (23) with a defined traction force, **characterized in that**
the traction force for the winding operation starts at the separator (22).

8. Method according to Claim 7, wherein the separator (22) is wound as a closed strip.

9. Method for producing a battery according to Claim 7 or 8, wherein the separator (22), as a strip, is suspended from an outgoing conductor (2), preferably from the anode outgoing conductor, and from a traction element (24) which is designed to apply the defined traction force.

10. Method according to one of Claims 7 to 9, further comprising the steps of:
c) providing a housing for accommodating the active strip;
d) cutting out at least one notch along the longitudinal side, in particular in the winding direction, of the active strip and/or at least one recess along the longitudinal side, in particular in the winding direction, of the active strip, in each case in a predefined pattern;
e) winding up the active strip, so that a group of notches and/or a group of recesses come to lie one above the other in such a way that at least one continuous three-dimensional empty volume is formed;
f) introducing the wound-up active strip into the housing, so that the housing is substantially filled by the wound-up active strip.

11. Method according to one of Claims 7 to 10, wherein the active strip comprises at least one layer of cathode material and at least one layer of anode material.

12. Method according to Claim 10, wherein the housing is closed by a cover.

13. Method according to one of Claims 7 to 12, wherein the cutting-out operation is a stamping operation and/or a laser-cutting operation.

## Revendications

1. Batterie à structure enroulée, comprenant
a) un boîtier (6), qui définit un volume actif V, dans lequel le volume actif V se compose d'un volume de base U moins au moins un volume d'enfoncement X et/ou moins au moins un volume d'évidement Y et/ou plus au moins un volume de renflement Z;
b) une bande active (1), qui remplit essentiellement sous forme enroulée le volume actif V et qui comprend au moins une couche d'anode (11) et au moins une couche de cathode (12), et
c) la bande active (1) présente dans la direction longitudinale, en particulier dans la direction dans laquelle elle est enroulée, des découpes (15; 20) et/ou des encoches (14; 25), qui sont configurées de telle manière que les découpes (20) et/ou les encoches (14; 25) viennent se superposer dans l'état enroulé de la bande active (1), de telle manière qu'une somme de découpes (20) et/ou d'encoches (14; 25) définisse un volume P, qui correspond essentiellement à la somme du volume d'enfoncement X et/ou du volume d'évidement Y, et
d) dans lequel la bande active (1) présente des découpes (15; 20) dans la direction longitudinale et les découpes (15; 20) viennent se superposer dans l'état enroulé de la bande (1), de telle manière qu'elles donnent une forme enroulée de la bande active (1) qui diffère d'une forme de base cylindrique ayant le volume de base U, notamment de telle manière que la bande active enroulée (1) occupe le volume de base U moins le volume d'enfoncement X et/ou moins le volume d'évidement Y,
**caractérisée en ce que** les découpes (15) sont de grandeur différente.

2. Batterie selon la revendication 1, dans laquelle la bande active (1) présente des encoches (14; 25) dans la direction longitudinale et les encoches (14; 25) viennent se superposer dans l'état enroulé de la bande (1), de telle manière qu'elles donnent une forme enroulée de la bande active (1) qui diffère d'une forme de base cylindrique ayant le volume de base U, notamment de telle manière que la bande active enroulée (1) occupe essentiellement le volume de base U et le volume de renflement Z.

3. Batterie selon la revendication 1, dans laquelle les découpes (15) croissent dans la direction longitudinale, et en particulier croissent dans la direction dans laquelle la bande est enroulée, de telle manière que la bande active enroulée (1) occupe le volume de base U moins le volume d'enfoncement X.

4. Batterie selon l'une quelconque des revendications 1 à 3, dans laquelle les découpes (15; 20) sont espacées sur la bande active, de telle manière qu'elles viennent se superposer dans l'état enroulé de la bande (1), de telle manière qu'au moins un volume continu soit défini par les découpes (15; 20).

5. Batterie selon l'une quelconque des revendications 1 à 4, comprenant au moins un séparateur (22) entre chaque au moins une couche d'anode (11) et chaque au moins une couche de cathode (12).

6. Batterie selon la revendication 5, dans laquelle une distance latérale entre un bord de coupe de la bande active (1) et une paroi intérieure de boîtier du boîtier (6) est respectée et dans laquelle la distance entre le bord de coupe de la couche d'anode (11) et le bord de coupe de la couche de cathode (12) de la bande active et la paroi intérieure de boîtier est différente, de telle manière qu'il existe au total une autre distance (26) entre le bord de coupe de la couche d'anode (11) et le bord de coupe de la couche de cathode (12).

7. Procédé de fabrication d'une batterie à structure enroulée selon la revendication 1, comprenant les étapes suivantes:
a) préparer une bande active (1) avec une couche d'anode (11) et une couche de cathode (12) et un séparateur (22), qui est placé entre la couche d'anode (11) et la couche de cathode (12);
b) enrouler la bande active autour des collecteurs, de telle manière que la couche d'anode (11) soit fixée au collecteur anodique (2) et que la couche de cathode (12) soit fixée au collecteur cathodique (3) et que la couche d'anode (11) et la couche de cathode (12) soient enroulées autour des collecteurs dans une direction d'enroulement (23) avec une force de traction définie,
**caractérisé en ce que** la force de traction pour l'enroulement est appliquée au séparateur (22).

8. Procédé selon la revendication 7, dans lequel on enroule le séparateur (22) sous la forme d'une bande fermée.

9. Procédé de fabrication d'une batterie selon la revendication 7 ou 8, dans lequel on suspend le séparateur (22) sous forme de bande à un collecteur (2), de préférence au collecteur anodique, et à un organe de traction (24), qui est conçu de façon à appliquer la force de traction définie.

10. Procédé selon l'une quelconque des revendications 7 à 9, comprenant en outre les étapes suivantes:
c) préparer un boîtier destiné à contenir la bande active;
d) tailler au moins une encoche le long du côté longitudinal, en particulier dans la direction d'enroulement, de la bande active et/ou au moins un évidement le long du côté longitudinal, en particulier dans la direction d'enroulement, de la bande active, chaque fois selon un motif prédéfini;
e) enrouler la bande active, de telle manière qu'un groupe d'encoches et/ou un groupe d'évidements viennent se superposer, de telle manière qu'au moins un volume vide tridimensionnel continu soit formé;
f) introduire la bande active enroulée dans le boîtier, de telle manière que le boîtier soit rempli essentiellement par la bande active enroulée.

11. Procédé selon l'une quelconque des revendications 7 à 10, dans lequel la bande active comprend au moins une couche de matériau de cathode et au moins une couche de matériau d'anode.

12. Procédé selon la revendication 10, dans lequel on ferme le boîtier avec un couvercle.

13. Procédé selon l'une quelconque des revendications 7 à 12, dans lequel la taille est un découpage et/ou une coupe au laser.
